# EUROPEAN PATENT SPECIFICATION

(11) **EP 2 453 513 B1**
(45) Date of publication and mention of the grant of the patent: **21.05.2014**
(21) Application number: 11173398.6
(22) Date of filing: 11.07.2011
(51) Int. Cl.: H01M 10/48, H01M 10/60, H01M 10/42, G01K 1/14, G01K 7/22

(54) **Thermistor device and secondary battery**
Thermistorvorrichtung und Sekundärbatterie
Dispositif de thermistor et batterie secondaire

(30) Priority: 12.11.2010 US 413351 P; 28.06.2011 US 201113171357
(43) Date of publication of application: 16.05.2012
(73) Proprietor: Samsung SDI Co., Ltd., Yongin-si, Gyeonggi-do (KR)
(72) Inventor: Yoo, Martin, Gyeonggi-do (KR)
(74) Representative: Walaski, Jan Filip

(56) References cited:
- GB-A- 2 281 810
- US-A1- 2007 020 509
- US-A1- 2010 136 392

## Description

The present invention relates to a thermistor device and a secondary battery having the same.

A thermistor is a protection element used for a secondary battery and is a type of resistor whose resistance varies with temperature. Thermistors are classified into a negative temperature coefficient (NTC) thermistor formed of an NTC material whose resistance decreases with increasing temperature, and a positive temperature coefficient thermistor (PTC) formed of a PTC material whose resistance increases with increasing temperature. The PTC material has a relatively low resistance at normal temperature, allowing current to flow smoothly. However, when the PTC material increases in temperature due to increasing ambient temperature or overcurrent, resistance increases about 1000 to 10000 times or more as compared with initial resistance to block flowing current. Thus, the PTC material is widely used to protect various electronic components from overheating or overcurrent.

According to the invention, there is provided a thermistor device comprising a body comprising an elastic material, a thermistor element mounted to an external surface of the body, one or more terminals for connection to a circuit board and a conductive connection member arranged to connect the thermistor element to the one or more terminals, wherein the conductive connection member is disposed around an outside surface of the body.

The conductive connection member therefore acts both to connect the thermistor element to the terminals and to confine the elastic material. The result may be a conveniently packaged discrete thermistor device with a simple construction, which allows the thermistor element to be easily biased against an external surface.

The conductive connection member may be arranged to enclose the body.

The conductive connection member may comprise a conductive strip running around a portion of the body, the thermistor element being mounted to the strip. The strip can still function to retain the elastic material, while minimising the amount of material required to make the electrical connection.

The one or more terminals, the conductive connection member and the thermistor element may together comprise a film thermistor, wherein the film thermistor is wrapped around the elastic body.

The one or more terminals may be on one side of the device and the thermistor element may be on an opposite side of the device.

The body of the thermistor device may be porous and may include one or more holes extending in a direction perpendicular to that in which the body is configured to be compressed.

A secondary battery may comprise a bare cell, a protection circuit module and a thermistor device as defined above mounted to the protection circuit module, wherein an external surface of the thermistor element is arranged to be in contact with an external surface of the bare cell and the thermistor device is mounted so that the thermistor element is biased into contact with the external surface of the bare cell by the elastic body.

The protection circuit module may comprise a printed circuit board having one or more holes for receiving the one or more terminals. An end portion of the one or more terminals may be bent after insertion through the one or more holes in the printed circuit board. The printed circuit board may comprise a recess into which the thermistor device is seated.

The secondary battery may comprise a plurality of bare cells arranged end to end, wherein the printed circuit board is mounted along the length of the bare cells, and the thermistor device lies between the printed circuit board and the bare cells. The secondary battery may alternatively comprise a plurality of bare cells arranged side by side, wherein the printed circuit board is disposed across the plurality of bare cells.

The thermistor device may comprise a body that fits between adjacent bare cells and has first and second external surfaces, each arranged to be biased against external surfaces of respective ones of the adjacent bare cells.

The or each bare cell may be cylindrical, and an external surface of the thermistor device to which the thermistor element is mounted may be concave to correspond to an outer surface of the cylindrical bare cells.

The accompanying drawings, together with the specification, illustrate exemplary embodiments of the present invention, and, together with the description, serve to explain the principles of the present invention.
FIG. 1A is an exploded perspective view illustrating a battery pack according to an embodiment;
FIG. 1B is a plan view illustrating the battery pack of FIG. 1A;
FIG. 2 is a cross-sectional view illustrating a thermistor device to be mounted to a circuit board according to an embodiment;
FIG. 3A is a perspective view illustrating a thermistor device according to an embodiment;
FIG. 3B is a lateral view of the thermistor device of FIG. 3A;
FIG. 3C is a lateral view of a thermistor device according to another embodiment;
FIG. 3D is a lateral view of a thermistor device according to still another embodiment;
FIG. 3E is a perspective view of a thermistor device according to still another embodiment;
FIG. 4A is a lateral view of a thermistor device having a curved side;
FIG. 4B is a lateral view illustrating the thermistor device of FIG. 4A in contact with a bare cell;
FIG. 5 is a perspective view of a thermistor device formed with a penetration hole;
FIG. 6 is a cross-sectional view illustrating a thermistor device mounted to a circuit board according to an embodiment;
FIG. 7 is a schematic plan view illustrating a battery pack according to another embodiment;
FIG. 8 is a schematic front view illustrating a position of a thermistor device according to an embodiment;
FIG. 9 is a lateral view of a thermistor device according to another embodiment; and
FIG. 10 is a front view illustrating how the thermistor device of FIG. 9 is used.

Hereinafter, exemplary embodiments of the present invention will be described with reference to the accompanying drawings. In the specification, terms to indicate directions "up," "down," "right," and "left" are based on directions in the drawings unless the context clearly indicates otherwise. Further, like reference numerals refer to like elements in the embodiments.

### < First Embodiment>

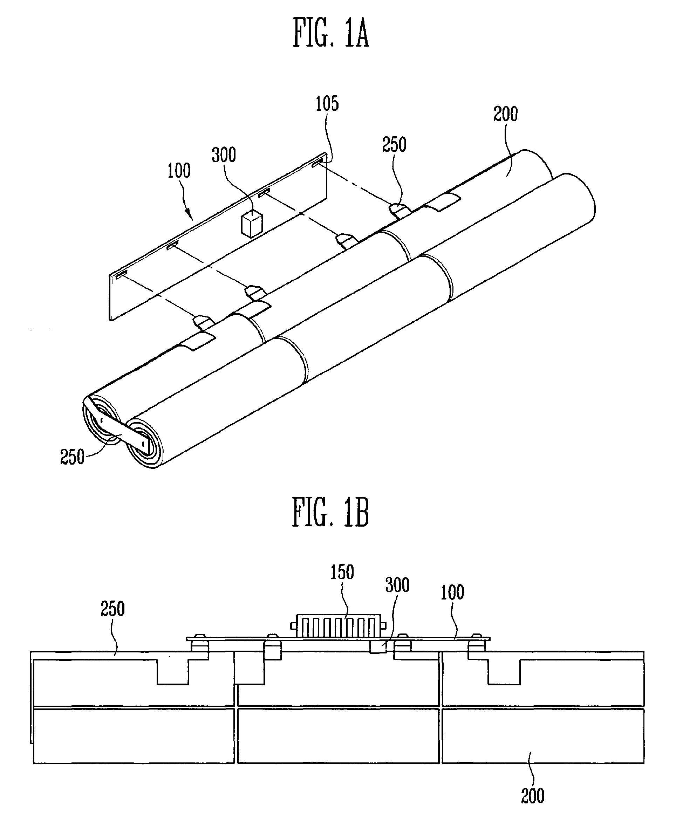

As shown in FIGS. 1A and 1B, a secondary battery pack according to an embodiment includes a protection circuit module 100 including a thermistor device 300 and at least one bare cell 200 electrically connected to the protection circuit module 100. The thermistor device 300 includes a thermistor, also referred to as a thermistor element, which will be described below. The thermistor device is mounted between the protection circuit module 100 and the bare cell 200 so that the thermistor element is closely in contact with an external surface of the bare cell 200.

First, the protection circuit module 100 of the present embodiment is formed of a module and a protection circuit seated on a printed circuit board, the module performing charging and discharging and securing stability while charging and discharging are performed. The protection circuit module 100 includes a terminal 105 connected to each bare cell 200. Each bare cell 200 is electrically connected to the terminal formed in the protection circuit module 100 through a member functioning as an electrical conducting wire, such as a nickel tab 250. Further, as shown in FIG. 1B, a connector 150 may be formed on an outside of the protection circuit module 100 to be connected to an external device.

Terminal accommodation holes 120 are formed in a pair of a cathode and an anode in the protection circuit module 100, a terminal of the thermistor device 300 being accommodated in the terminal accommodation holes 120. Here, a seating part 110 may be formed in the protection circuit module 100 to improve fixing of the thermistor device 300 to the protection circuit module 100. The seating part 110 is formed with a stepped part in a similar shape to a contact surface with the thermistor device 300.

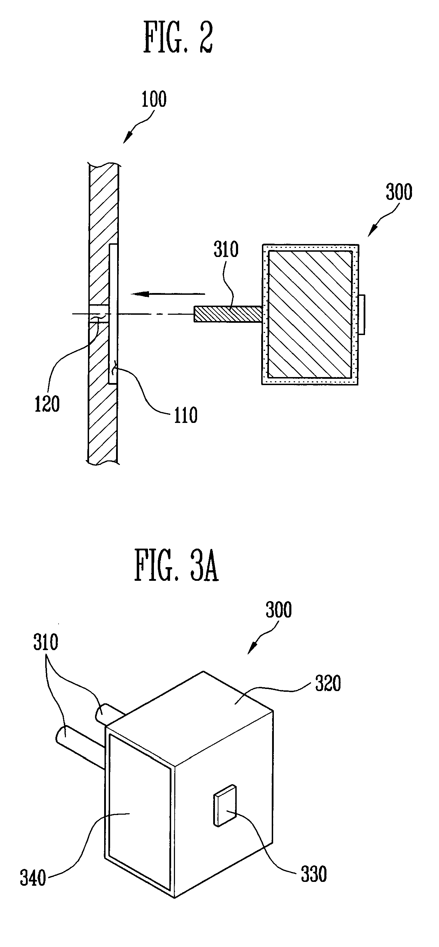

As shown in FIG. 2, a pair of terminals 310 of the thermistor device 300 is inserted into the terminal accommodation holes 120 formed in the protection circuit module 100 and fixed by welding or soldering. Here, as described above, in order to prevent the thermistor device 300 from being shaken or being easily detached, the seating part 110 recessed in a region adjacent to the terminal accommodation holes 120 is formed to seat the thermistor device 300. Thus, due to the recessed seating part 100, the thermistor device 300 may be securely mounted in the printed circuit board of the protection circuit module 100. The seating part 110 is formed in a groove stepped and recessed in a region of the protection circuit module 100, particularly the printed circuit board of the protection circuit module 100, to accommodate the thermistor device 300.

Then, the protection circuit module 100 combined with the thermistor device 300 is connected to the bare cell 200. One side of the nickel tab 250 connecting terminals of bare cells 200 in parallel or in series is connected to a corresponding protection circuit module through soldering or welding. Here, as shown in FIG. 1B, the thermistor device 300 is disposed between the protection circuit module 100 and the bare cell 200 and is pressed against the external surface of the bare cell 200. The thermistor device 300 is fixed to the protection circuit module 100 when the battery pack is formed and pressed between the protection circuit module and the bare cell 200, so that the thermistor device 300 has a stable structure which is not easily detached.

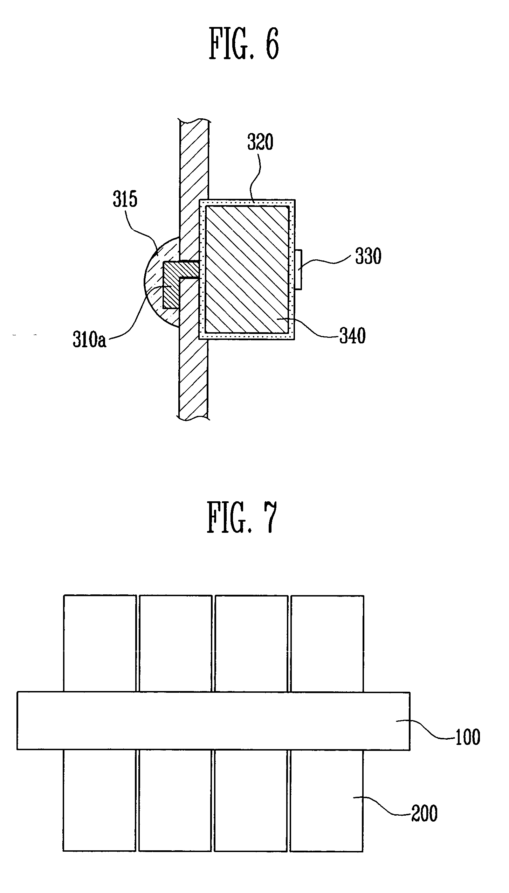

Here, in order to improve fixing of the thermistor device 300, as shown in FIG. 6, a pair of terminals 310a may be bent at an end portion and be connected through welding or soldering. Here, due to the bent end portion of the terminals 310a, the thermistor device 300 is not easily detached even though solder comes off.

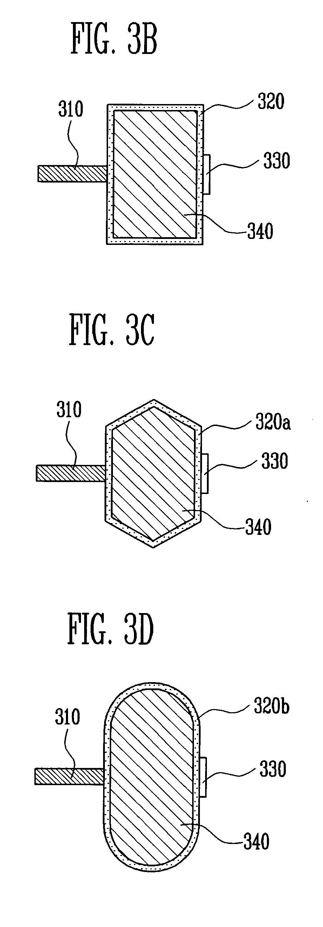

FIG. 3A is a perspective view illustrating a thermistor device according to an embodiment of the present invention, and FIG. 3B is a lateral view of the thermistor device of FIG. 3A. FIGS. 3C to 3E are lateral views and a perspective view of various thermistor devices according to embodiments of the present invention.

As shown in FIGS. 3A and 3B, the thermistor device 300 includes a supporting body 340, a conductive connection part 320, a thermistor element 330, and a pair of terminals 310. In the present embodiment, the thermistor device 300 collectively refers to a means for measuring temperature using the thermistor element 330. The thermistor device 300 is a device whose resistance varies with ambient temperature and may use a positive temperature coefficient (PTC) thermistor element or a negative temperature coefficient (NTC) thermistor element.

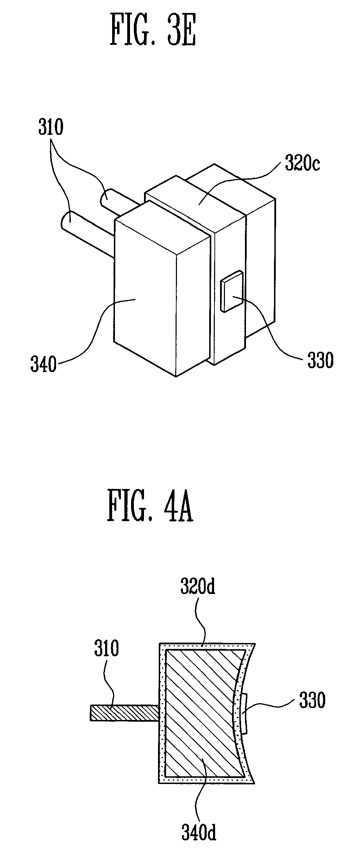

The supporting body 340 may be formed of an elastic material which is contractable by an external force. The supporting body 340 of the elastic material enables the thermistor device 300 to be biased against the bare cell 200 elastically. The supporting body 340 of the present embodiment has a cuboid shape. However, as shown in FIG. 3C, the supporting body 340 may have a hexagonal longitudinal section, and a conductive connection part 320a may be formed on an external surface of the hexagonal supporting body 340. Further, as shown in FIG. 3D, the supporting body 340 may have a round longitudinal section without an edge, and a conductive connection part 320b may be formed on an external surface of the round supporting body 340. The supporting body 340 may have various shapes. The conductive connection part 320 is an element to electrically connect the thermistor element 330 with the pair of terminals 310. The conductive connection part 320 is formed to enclose the external surface of the supporting body 340 of the elastic material. Here, the conductive connection part 320 may use a film-type conductive member or an insulating film on which a conducting wire is printed. The conductive connection part 320 also functions to fix the supporting body 340. Thus, as shown in FIG. 3A, the conductive connection part 320 may be formed to enclose four sides of the supporting body 340 while the remaining opposite two sides are open. Further, when the conductive connection part 320 has a hexagonal longitudinal section or a round longitudinal section, as shown in FIGS. 3C and 3D, the conductive connection part 320 encloses the external surface of the supporting body 340. As shown in FIG. 3E, a conductive connection part 320c may be formed on a portion of the external surface of the supporting body 340 to have a minimum area just for connection of the thermistor element 330 with the pair of terminals 310.

The conductive connection part 320 of the thermistor element 300 are referred to as 320a, 320b, 320c, and 320d depending on shapes but are collectively referred to as 320 hereinafter.

The thermistor element 330 is formed on an external surface of the conductive connection part 320. The thermistor element 330 is closely attached to and in contact with the external surface of the bare cell 200. The thermistor element 330 converts information based on ambient temperature into electrical characteristics and transmits the electrical characteristics to the protection circuit module 100. That is, the thermistor element 330 may be formed on the conductive connection part 320 so that the thermistor element 330 is electrically connected to the protection circuit module 100 through the conductive connection part 320 and the pair of terminals 310.

In detail, the thermistor element 330 measures temperature of the bare cell 200 and is connected to the protection circuit of the protection circuit module 100 through the conductive connection part 320, 320a, 320b, 320c, and 320d and the pair of terminals 310.

The pair of terminals 310, the conductive connection part 320, and the thermistor element 330 may be formed in a film type. That is, as an integrated film-type thermistor device is used, the respective components may not need manufacturing separately, thereby facilitating fabrication and reducing manufacturing costs.

### < Second Embodiment>

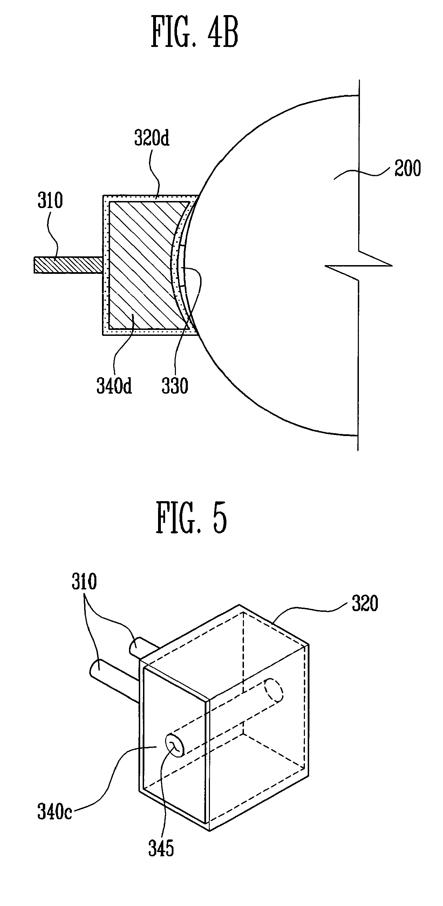

FIG. 4A is a lateral view of a thermistor device having a curved or round side according to another embodiment of the present invention, and FIG. 4B is a lateral view illustrating the thermistor device of FIG. 4A in contact with a bare cell.

As shown in FIGS. 4A and 4B, the thermistor device 300 of the present embodiment includes a supporting body 340d having one side curved or round. A conductive connection part 320d is formed on an external surface of the supporting body 340d. A thermistor element 330 is attached to a round external surface of the conductive connection part 320d or the supporting body 340d.

The external surface of the supporting body 340d or the conductive connection part 320d in contact with the bare cell may be formed to have a round shape so that the thermistor device 300 is closely in contact with the cylindrical bare cell. Further, due to the supporting body 340d having the round shape, the thermistor device 300 of the present embodiment may have a structure that results in improved contact and is stable when the bare cell 200 is cylindrical. FIG. 4B shows that the thermistor element 330 attached to one round side of the conductive connection part 320b or the supporting body 340d is attached and fixed to the bare cell 200.

### < Third Embodiment>

FIG. 5 is a perspective view of a thermistor device formed with a porous hole according to still another embodiment of the present invention. In the present embodiment, a supporting body 340c is formed of an elastic material and has a porous shape. Although the supporting body 340c of the elastic material includes one porous hole 345 in FIG. 5, a plurality of porous holes 345 may be formed. When the supporting body 340c has the porous hole 345 therein, a thermistor device 300 may be improved in elasticity. That is, the supporting body 340c may be improved in contraction and expansion. The porous hole 340c may be formed parallel with a pivot of the bare cell 200 with which the thermistor device 300 is closely in contact, or be formed perpendicularly to a direction in which the supporting body 340c contracts. The porous hole 340c may have a longitudinal section which is not limited in shape.

### < Fourth Embodiment>

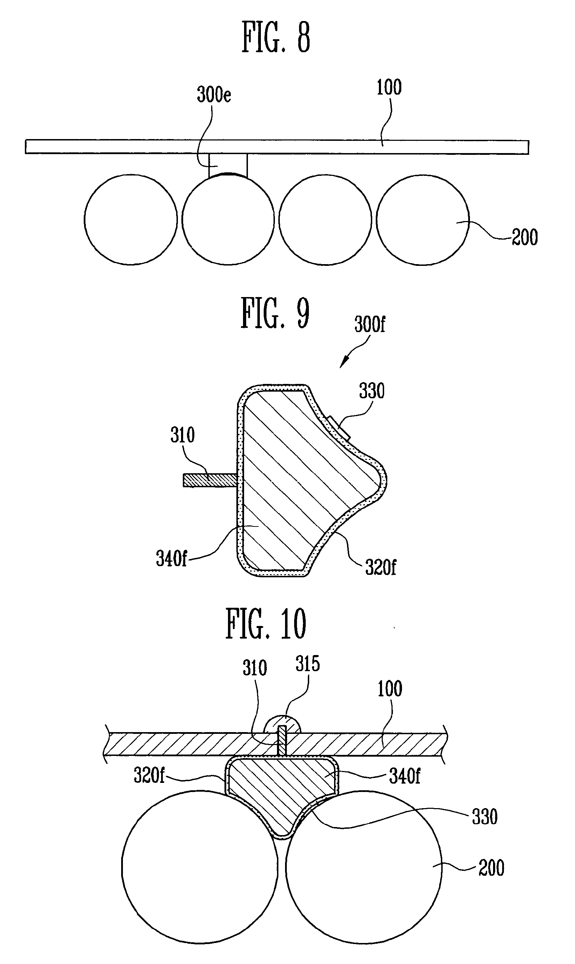

FIG. 7 is a schematic plan view illustrating a battery pack according to still another embodiment of the present invention, and FIG. 8 is a schematic front view illustrating a position of a thermistor device.

In the present embodiment, as shown in FIGS. 7 and 8, a protection circuit module 100 is disposed perpendicular to a plurality of bare cells 200. Here, when the thermistor device 300e is in contact with only one of the bare cells 200, as shown in FIG. 8, the present embodiment is similar to the first embodiment. Thus, a structure and a method of connecting the thermistor device 300e and the protection circuit module 100 may be the same as described above.

### < Fifth Embodiment>

FIG. 9 is a lateral view of a thermistor device according to still another embodiment of the present invention, and FIG. 10 is a front view illustrating that the thermistor device of FIG. 9 is used.

In the present embodiment, as shown in FIGS. 9 and 10, a protection circuit module 100 is disposed over a bare cell 200, and the thermistor device 300e is simultaneously in contact with two cylindrical bare cells. Here, the thermistor device 300e includes a supporting body 340f being formed of an elastic material and having a shape to fill a spatial shape or a space between the two neighbouring bare cells 200, as shown in FIG. 10. Here, the supporting body 340f may have a cross section having a shape of a space formed between the supporting body 340f and the two bare cells 200 so that the thermistor device 300e is closely in contact with the two neighbouring bare cells 200. In FIGS. 9 and 10, the supporting body 340f has a roughly pentagonal shape. Further, in order to improve attachment or adhesion, the thermistor device 300f is formed to have a round surface which is in contact with the bare cells 200. When the thermistor device 300f is attached to the protection circuit module 100, and then the protection circuit module 100 is connected with the bare cells 200, two surfaces of the thermistor device 300f are closely in contact with the neighbouring bare cells 200 simultaneously to form a stable structure, shown in FIG. 10. Although the present embodiment illustrates the thermistor device 300f is closely in contact with the two bare cells 200, the thermistor device 300f may be closely in contact with more than two bare cells. The thermistor device 300f may include at least one thermistor element 330 formed between the supporting body 340f and the bare cells 200. Here, when two or more thermistor elements 330 are provided, the same number of pairs of terminals 310 as the thermistor elements 330 is provided so that the terminals 310 are connected to the thermistor elements 330. For example, when two thermistor elements 330 are provided, two pairs of terminals 310 connected to the respective thermistor elements 330 may be provided. Alternatively, when one or more thermistor elements 330 are provided, the one or more thermistor elements 330 are connected to a pair of terminals 310 in parallel or in series to measure temperature.

As described above, according to embodiments of the present invention, a thermistor device may be stably fixed in a secondary battery pack without a fixing component, such as a fixing tape.

Further, embodiments of the present invention may omit a process in which the thermistor device is fixed in the secondary battery pack using the fixing tape or the like.

### < Sixth Embodiment>

The present embodiment relates a conductive connection part 320g according to an embodiment.

As described above, the conductive connection part 320g is an element to electrically connect a thermistor element 330 and a pair of terminals 310. The conductive connection part 320g of the present embodiment is formed to pass through a supporting body 340g. Further, the conductive connection part 320g has elasticity to bend in a predetermined direction when the supporting body 340g contracts by an external force.

It will be understood that while the thermistor device 300 may have a pair of terminals 310 for electrical connection, the terminals may be enclosed in a single physical connection structure to be inserted through a single hole in the circuit board 100, or just one of the terminals may pass through a hole in the circuit board to be connected to the circuit board.

While the present invention has been described in connection with certain exemplary embodiments, it is to be understood that the invention is not limited to the disclosed embodiments, but, on the contrary, is intended to cover various modifications and equivalent arrangements included within the scope of the appended claims.

## Claims

1. A thermistor device comprising:
a body (340, 340c, 340d, 340f) comprising an elastic material;
a thermistor element (330) mounted to an external surface of the body;
one or more terminals for connection to a circuit board; and
a conductive connection member (320) arranged to connect the thermistor element to the one or more terminals,
wherein the conductive connection member is disposed around an outside surface of the body (340).

2. The thermistor device of claim 1, wherein the conductive connection member is arranged to enclose the body.

3. The thermistor device of claim 1, wherein the conductive connection member comprises a conductive strip (320c) running around a portion of the body (340), the thermistor element (330) being mounted to the strip.

4. The thermistor device of claim 1, 2 or 3, wherein the one or more terminals, the conductive connection member and the thermistor element together comprise a film thermistor, wherein the film thermistor is wrapped around the elastic body.

5. The thermistor device of any one of the preceding claims, wherein the one or more terminals are on one side of the device and the thermistor element is on an opposite side of the device.

6. The thermistor device of any one of the preceding claims, wherein the body (340c) of the thermistor device is porous.

7. The thermistor device of any one of the preceding claims, wherein the body includes one or more holes extending in a direction perpendicular to that in which the body is configured to be compressed.

8. A secondary battery comprising:
a bare cell (200);
a protection circuit module (100); and
a thermistor device (300, 300e, 300f) according to any one of the preceding claims mounted to the protection circuit module,
wherein an external surface of the thermistor element (330) is arranged to be in contact with an external surface of the bare cell and the thermistor device is mounted so that the thermistor element is biased into contact with the external surface of the bare cell by the elastic body.

9. The secondary battery of claim 8, wherein the protection circuit module (100) comprises a printed circuit board having one or more holes (120) for receiving the one or more terminals (310, 310a).

10. The secondary battery of claim 9, wherein an end portion of the one or more terminals is bent after insertion through the one or more holes in the printed circuit board.

11. The secondary battery of claim 9 or 10, wherein the printed circuit board comprises a recess (120) into which the thermistor device (300) is seated.

12. The secondary battery of claim 9, 10 or 11, comprising a plurality of bare cells (200) arranged end to end, wherein the printed circuit board is mounted along the length of the bare cells, and the thermistor device lies between the printed circuit board and the bare cells.

13. The secondary battery of any one of claims 9 to 11, wherein the secondary battery comprises a plurality of bare cells (200) arranged side by side and the printed circuit board (100) is disposed across the plurality of bare cells.

14. The secondary battery of claim 13, wherein the thermistor device comprises a body (340f) that fits between adjacent bare cells and has first and second external surfaces, each arranged to be biased against external surfaces of respective ones of the adjacent bare cells.

15. The secondary battery of any one of claims 8 to 14, wherein the or each bare cell is cylindrical, and an external surface of the thermistor device (300) to which the thermistor element (330) is mounted is concave to correspond to an outer surface of the cylindrical bare cells.

## Patentansprüche

1. Thermistorvorrichtung umfassend:
einen Körper (340, 340c, 340d, 340f) umfassend ein elastisches Material;
ein Thermistorelement (330), das an einer Außenfläche des Körpers angebracht ist;
eine oder mehrere Anschlussstücke zum Anschluss an eine Leiterplatte; und
ein leitfähiges Verbindungsglied (320), das zum Verbinden des Thermistorelements mit dem einen oder den mehreren Anschlussstücken angeordnet ist,
wobei das leitfähige Verbindungsglied um eine außenseitige Fläche des Körpers (340) angeordnet ist.

2. Thermistorvorrichtung nach Anspruch 1, wobei das leitfähige Verbindungsglied angeordnet ist, den Körper zu umschließen.

3. Thermistorvorrichtung nach Anspruch 1, wobei das leitfähige Verbindungsglied einen um einen Bereich des Körpers (340) verlaufenden leitfähigen Streifen (320c) umfasst, wobei das Thermistorelement (330) an dem Streifen angebracht ist.

4. Thermistorvorrichtung nach Anspruch 1, 2 oder 3, wobei das eine oder die mehreren Anschlussstücke, das leitfähige Verbindungsglied und das Thermistorelement zusammen einen Filmthermistor umfassen, wobei der Filmthermistor um den elastischen Körper gewickelt ist.

5. Thermistorvorrichtung nach einem der vorstehenden Ansprüche, wobei die eine oder die mehreren Klemmen sich auf einer Seite der Vorrichtung befinden und das Thermistorelement sich auf einer gegenüberliegenden Seite der Vorrichtung befindet.

6. Thermistorvorrichtung nach einem der vorstehenden Ansprüche, wobei der Körper (340c) der Thermistorvorrichtung porös ist.

7. Thermistorvorrichtung nach einem der vorstehenden Ansprüche, wobei der Körper eines oder mehrere Löcher aufweist, die sich in eine Richtung erstrecken, die senkrecht zu derjenigen liegt, in die der Körper ausgestaltet ist, komprimiert zu werden.

8. Sekundärbatterie, umfassend:
eine Rohzelle (200);
ein Schutzschaltungsmodul (100); und
eine Thermistorvorrichtung (300, 300e, 300f) nach einem der vorstehenden Ansprüche, die an dem Schutzschaltungsmodul angebracht ist,
wobei eine Außenfläche des Thermistorelements (330) so angeordnet ist, dass sie mit einer Außenfläche der Rohzelle in Kontakt steht, und die Thermistorvorrichtung angebracht ist, damit das Thermistorelement durch den elastischen Körper in Kontakt mit der Außenfläche der Rohzelle vorgespannt ist.

9. Sekundärbatterie nach Anspruch 8, wobei das Schutzschaltungsmodul (100) eine Leiterplatte mit einem oder mehreren Löchern (120) zur Aufnahme des einen oder der mehreren Anschlussstücke (310, 310a) umfasst.

10. Sekundärbatterie nach Anspruch 9, wobei ein Endabschnitt des einen oder der mehreren Anschlussstücke nach dem Einschieben durch das eine oder die mehreren Löcher in der Leiterplatte gekrümmt ist.

11. Sekundärbatterie nach Anspruch 9 oder 10, wobei die Leiterplatte eine Aussparung (120) umfasst, in welche die Thermistorvorrichtung (300) eingesetzt ist.

12. Sekundärbatterie nach Anspruch 9, 10 oder 11, umfassend eine Vielzahl von Rohzellen (200), die Ende an Ende angeordnet sind, wobei die Leiterplatte entlang der Länge der Rohzellen angebracht ist und die Thermistorvorrichtung zwischen der Leiterplatte und den Rohzellen liegt.

13. Sekundärbatterie nach einem der Ansprüche 9 bis 11, wobei die Sekundärbatterie eine Vielzahl von Rohzellen (200) umfasst, die Seite an Seite angeordnet sind, und die Leiterplatte (100) über der Vielzahl von Rohzellen angeordnet ist.

14. Sekundärbatterie nach Anspruch 13, wobei die Thermistorvorrichtung einen Körper (340f) umfasst, der zwischen benachbarte Rohzellen passt und erste und zweite Außenflächen besitzt, die jeweils so angeordnet sind, dass sie gegen Außenflächen von entsprechenden der benachbarten Rohzellen vorgespannt sind.

15. Sekundärbatterie nach einem der Ansprüche 8 bis 14, wobei die oder jede Rohzelle zylindrisch ist, und eine Außenfläche der Thermistorvorrichtung (300), an der das Thermistorelement (330) angebracht ist, konkav ist, um einer Außenfläche der zylindrischen Rohzellen zu entsprechen.

## Revendications

1. Dispositif à thermistance comprenant :
un corps (340, 340c, 340d, 340f) comprenant un matériau élastique ;
un élément à thermistance (330) monté sur une surface externe du corps ;
une ou plusieurs borne(s) destinée(s) à être connectée(s) à une carte de circuit imprimé ; et
un élément de connexion conducteur (320) agencé pour connecter l'élément à thermistance à la ou aux plusieurs borne(s),
dans lequel l'élément de connexion conducteur est disposé autour d'une surface extérieure du corps (340).

2. Dispositif à thermistance de la revendication 1, dans lequel l'élément de connexion conducteur est agencé de manière à enfermer le corps.

3. Dispositif à thermistance de la revendication 1, dans lequel l'élément de connexion conducteur comprend une bande conductrice (320c) entourant une partie du corps (340), l'élément à thermistance (330) étant monté sur la bande.

4. Dispositif à thermistance de la revendication 1, 2 ou 3, dans lequel la ou les plusieurs borne(s), l'élément de connexion conducteur et l'élément à thermistance comprennent ensemble une thermistance de type film, où la thermistance de type film est enroulée autour du corps élastique.

5. Dispositif à thermistance de l'une quelconque des revendications précédentes, dans lequel la ou les plusieurs borne(s) est/sont située(s) sur un côté du dispositif et l'élément à thermistance est situé sur un côté opposé du dispositif.

6. Dispositif à thermistance de l'une quelconque des revendications précédentes, dans lequel le corps (340c) du dispositif à thermistance est poreux.

7. Dispositif à thermistance de l'une quelconque des revendications précédentes, dans lequel le corps comporte un ou plusieurs trou(s) s'étendant dans une direction perpendiculaire à celle dans laquelle le corps est configuré pour être comprimé.

8. Batterie secondaire, comprenant :
une cellule nue (200) ;
un module de circuit de protection (100) ; et
un dispositif à thermistance (300, 300e, 300f) selon l'une quelconque des revendications précédentes monté sur le module de circuit de protection,
où une surface externe de l'élément à thermistance (330) est agencée de manière à être en contact avec une surface externe de la cellule nue et le dispositif à thermistance est monté de sorte que l'élément à thermistance soit sollicité de manière à venir en contact avec la surface externe de la cellule nue par le corps élastique.

9. Batterie secondaire de la revendication 8, dans laquelle le module de circuit de protection (100) comprend une carte de circuit imprimé présentant un ou plusieurs trou(s) (120) destiné(s) à recevoir la ou les plusieurs borne(s) (310, 310a).

10. Batterie secondaire de la revendication 9, dans laquelle une partie d'extrémité de la ou des plusieurs borne(s) est courbée après insertion à travers le ou les plusieurs trou(s) dans la carte de circuit imprimé.

11. Batterie secondaire de la revendication 9 ou 10, dans laquelle la carte de circuit imprimé comprend un évidement (120) dans lequel le dispositif à thermistance (300) est placé.

12. Batterie secondaire de la revendication 9, 10 ou 11, comprenant une pluralité de cellules nues (200) agencées bout à bout, où la carte de circuit imprimé est montée le long de la longueur des cellules nues, et le dispositif à thermistance se situe entre la carte de circuit imprimé et les cellules nues.

13. Batterie secondaire de l'une quelconque des revendications 9 à 11, dans laquelle la batterie secondaire comprend une pluralité de cellules nues (200) agencées côte à côte et la carte de circuit imprimé (100) est disposée à travers la pluralité de cellules nues.

14. Batterie secondaire de la revendication 13, dans laquelle le dispositif à thermistance comprend un corps (340f) qui s'ajuste entre des cellules nues adjacentes et présente des première et deuxième surfaces externes, chacune étant agencée de manière à être sollicitée contre des surfaces externes de cellules respectives parmi les cellules nues adjacentes.

15. Batterie secondaire de l'une quelconque des revendications 8 à 14, dans laquelle la ou chaque cellule nue est cylindrique, et une surface externe du dispositif à thermistance (300) à laquelle l'élément à thermistance (330) est monté est concave pour correspondre à une surface extérieure des cellules nues cylindriques.
